# EUROPÄISCHE PATENTSCHRIFT

(11) **EP 1 087 153 B1**
(45) Veröffentlichungstag und Bekanntmachung des Hinweises auf die Patenterteilung: **27.04.2005**
(21) Anmeldenummer: 00118064.5
(22) Anmeldetag: 23.08.2000
(51) Int. Cl.: F16F 9/49

(54) **Vorrichtung zur Erhöhung der Dämpfung**
Device for increasing damping
Dispositif pour l'augmentation de l'amortissement

(30) Priorität: 23.09.1999 DE 19945632
(43) Veröffentlichungstag der Anmeldung: 28.03.2001
(73) Patentinhaber: ThyssenKrupp Bilstein GmbH, 58256 Ennepetal (DE)
(72) Erfinder: Sasse, Thomas, Dipl.-Ing., 58256 Ennepetal (DE)

(56) Entgegenhaltungen:
- DE-A- 1 505 360
- DE-B- 1 249 037
- DE-B- 1 430 494
- DE-C- 3 500 101
- GB-A- 763 557
- GB-A- 1 547 193
- US-A- 4 004 662

## Beschreibung

Die Erfindung betrifft eine Vorrichtung zur Erhöhung der Dämpfung am Endbereich von hydraulischen Schwingungsdämpfern mit hydraulischen Mitteln wobei der Durchströmquerschnitt des den Dämpferinnenraum in zwei Arbeitsräume unterteilenden Dämpferkolbens durch teilweises Abdecken der Zuströmfläche reduziert wird und wobei die Zuströmfläche aus mehreren nicht miteinander verbundenen Einzelzuströmflächen besteht. Derartige Vorrichtungen werden auch hydraulischer Zuganschlag bzw. hydraulischer Druckanschlag genannt.

Um zu verhindern, daß bei hydraulischen Schwingungsdämpfern der Arbeitskolben ungebremst in seine Endlage fährt, werden Zug- bzw. Druckanschläge vorgesehen. Speziell bei Schwingungsdämpfern an Kraftfahrzeugen hat es sich als vorteilhaft erwiesen, diese Zug- bzw. Druckanschläge mit hydraulischen Mitteln zu gestalten. Üblicherweise wird daher vorgesehen, daß die Zuströmquerschnitte des Arbeitskolbens am Ende des Hubweges mittels Scheiben oder Glocken teilweise abgedeckt werden. Die Abdeckscheiben bzw. Abdeckglocken sind dabei von einer Feder getragen, so daß am Endbereich des Hubweges eine erhöhte Dämpfung auftritt.

Derartige hydraulische Zug- bzw. Druckanschläge sind aus der DE-Lit. Reimpell, Stoll, Fahrwerktechnik: Stoß- und Schwingungsdämpfer, Seiten 186 bis 188 bekannt. Nachteilig hierbei erfolgt ein teilweises Abdecken der Einzelzuströmflächen, hier der Bohrungen, so daß sichelförmige Restzuströmöffnungen offenbleiben. Aufgrund von Toleranzen, Verschiebungen und sonstigen Einflüssen, kann nicht sichergestellt werden, daß diese sichelförmigen Restzuströmöffnungen einen gleichen und gleichbleibenden Querschnitt aufweisen. Durch die Sichelform ergibt das eine hohe Ungenauigkeit der Zuströmung und damit der Dämpfung im Arbeitsbereich der hydraulischen Anschläge.

Aus der GB-A-1 547 193 ist eine Vorrichtung mit allen Merkmalen des Oberbegriffs des Patentanspruchs 1 bekannt. Bei dieser bekannten Vorrichtung erfolgt die Anschlagbewegung im Endbereich unkontrolliert.

Der Erfindung liegt die Aufgabe zugrunde, die Vorrichtung gemäß Oberbegriff des Patentanspruchs 1 so weiterzubilden, dass die Anschlagbewegung kontrollierter gesteuert werden kann.

Diese Aufgabe wird erfindungsgemäß mit den Merkmalen des Anspruchs 1 gelöst. Vorteilhafte Aus- und Weiterbildungen sind in den Ansprüchen 2 bis 6 beschrieben.

Die mit der Erfindung erzielten Vorteile bestehen insbesondere darin, daß mit einfachen Bauteilen eine sichere und gleichbleibende hydraulische Anschlagdämpfung mit einer kontrolliert gesteuerten Anschlagbewegung erzielt werden kann.

Als besonderer Vorteil ist hervorzuheben, daß durch die Möglichkeit des Einsatzes unterschiedlicher Federscheiben bzw. Federscheibenpakete austrittsseitig am Zuströmkolben für die Druck- bzw. Zuganschlagdämpfung erreicht werden kann, daß sich die Druck-/Zuganschlagkennung bezüglich max/min. Dämpfkraft sowie Anstiegsgradient und Anlaufverhalten entsprechend den Erfordernissen beliebig abstimmen läßt und für das Fahrverhalten des Fahrzeugs reproduzierbare Dämpfkräfte erzeugt, was letztendlich zu einem berechenbareren Verhalten führt und der Sicherheit dient.

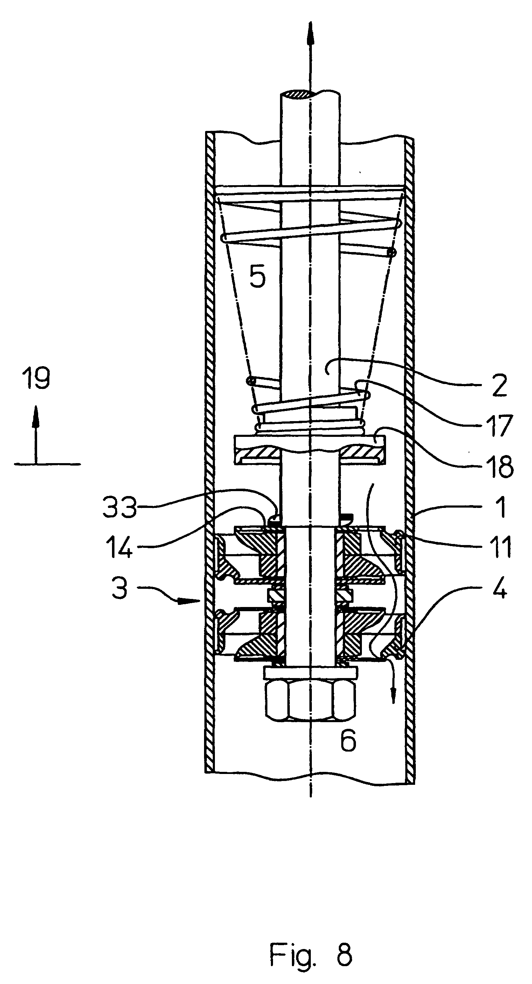

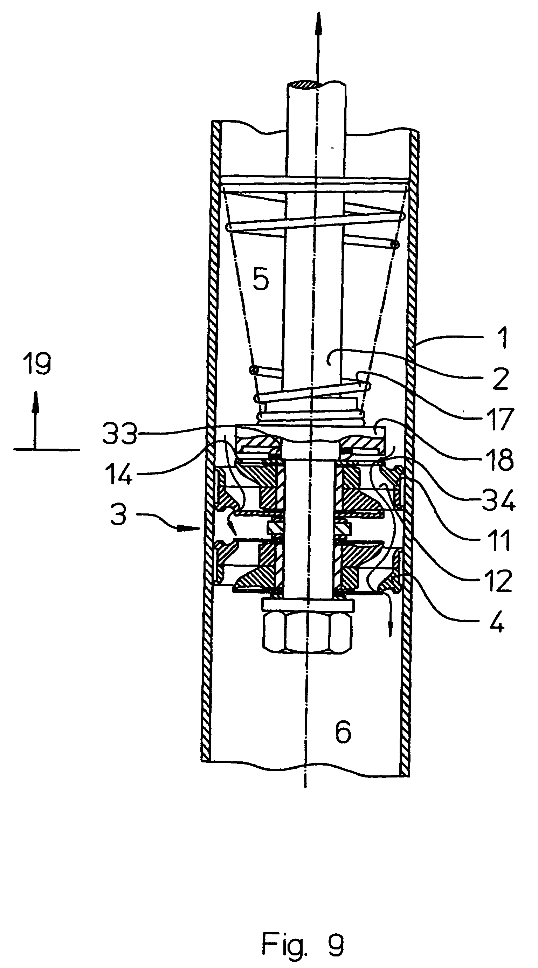

Im Folgenden wird die Erfindung anhand einer Zeichnung näher erläutert. In den Fig. 8 und 9 ist die erfindungsgemäße Vorrichtung dargestellt. Es zeigen
- Fig. 1: einen hydraulischen Zuganschlag außer Funktion,
- Fig. 2: einen hydraulischen Zuganschlag in Funktion,
- Fig. 3: einen hydraulischen Druckanschlag außer Funktion,
- Fig. 4: einen hydraulischen Druckanschlag in Funktion,
- Fig. 5: einen hydraulischen Zug- und Druckanschlag außer Funktion,
- Fig. 6: einen hydraulischen Zug- und Druckanschlag bei Funktion des Zuganschlages,
- Fig. 7: einen hydraulischen Zug- und Druckanschlag bei Funktion des Druckanschlages,
- Fig. 8: einen erfindungsgemäßen, weich gesteuerten Zuganschlag gemäß Fig. 1 und
- Fig. 9: einen erfindungsgemäßen, weich gesteuerten Zuganschlag gemäß Fig. 2.

Hydraulische Schwingungsdämpfer, speziell für Kraftfahrzeuge, weisen ein Dämpferrohr 1 auf, in das oszillierend eine Kolbenstange 2 eintaucht. Am eintauchenden Ende der Kolbenstange 2 ist ein Dämpferkolben 3 mit wenigstens einem Arbeitskolben 4 angebracht, der den mit Dämpfungsflüssigkeit gefüllten Innenraum des Dämpferrohres 1 in zwei Arbeitsräume 5, 6 unterteilt. Federscheiben 7, 8 oder Federscheibenpakete wirken als Ventile in jeweils eine Arbeitsrichtung des Arbeitskolbens 4 und erzeugen die gewünschte Dämpfungskraft. Diese Federscheiben 7, 8 decken jeweils den Austritt von im Arbeitskolben 4 angeordneten Durchströmkanälen 9, 10 ab. Üblicherweise ist die Anzahl und Form der Durchströmkanäle 9, 10 gleich und liegen auf einem gemeinsamen Durchmesser. Sie wechseln sich hier ab und unterscheiden sich dadurch, daß sie in unterschiedlicher Richtung schräg zur Kolbenstangenachse verlaufen. Dadurch ist es möglich, daß die Federscheiben 7, 8 den jeweils innenliegenden Ausströmquerschnitt der Durchströmkanäle 9, 10 abdecken, wobei die jeweils außenliegenden Zuströmquerschnitte offenbleiben. Andere Formen von Arbeitskolben mit anderen, beispielsweise fingerförmig ausgebildeten Federscheiben, sind in gleicher Weise einsetzbar.

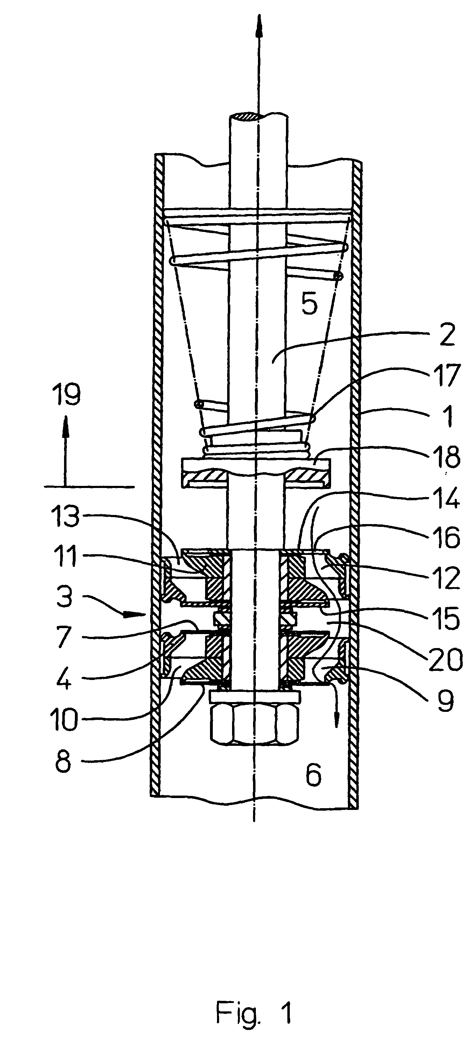

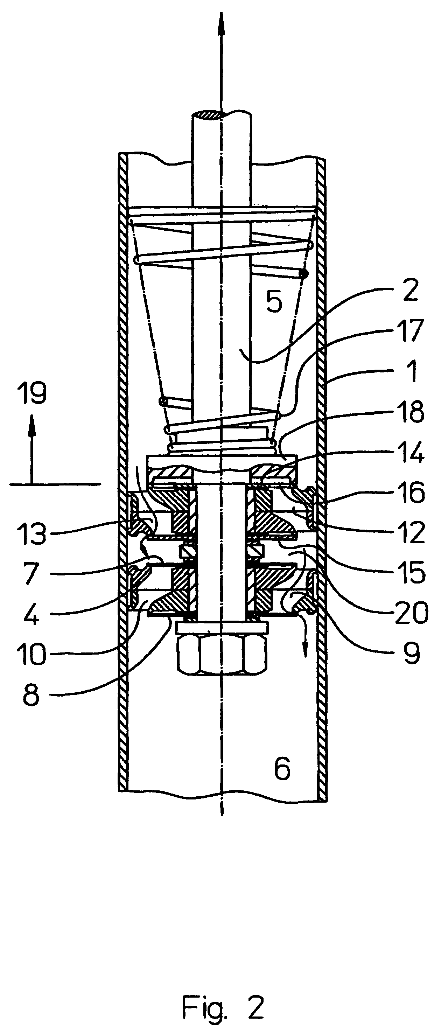

In den Fig. 1 und 2 ist ein hydraulischer Zuganschlag gezeigt. Hierzu trägt die Kolbenstange 2 kolbenstangenseitig neben dem Arbeitskolben 4 einen Zuströmkolben 11, der in gleicher Weise aufgebaut ist wie der Arbeitskolben 4. Auch am Zuströmkolben 11 sind beidseitig die innenliegenden Ausströmöffnungen der Durchströmkanäle 12, 13 über Federscheiben 14, 15 abgedeckt. Die dem Arbeitskolben 4 abgewandte Federscheibe 14 des Zuströmkolbens 11 weist jedoch Durchbrüche 16 auf. Eine kolbenstangenaustrittsseitig angeordnete Druckfeder 17 stützt sich kolbenstangenaußenseitig am Dämpferrohr 1 ab. Sie trägt an ihrem anderen Ende eine Abdeckplatte 18.

In Fig. 1 ist die Arbeitsstellung von Kolbenstange 2 und Dämpferkolben 3 gezeigt, d.h. der Schwingungsdämpfer arbeitet im Normalbetrieb. Fig. 1 zeigt die Durchströmverhältnisse der Dämpfungsflüssigkeit in Zugrichtung, also bei Ausfahren der Kolbenstange 2 aus dem Dämpferrohr 1. Dabei weist der obere Arbeitsraum 5 gegenüber dem unteren Arbeitsraum 6 einen Überdruck auf, was zum Durchströmen der Dämpfungsflüssigkeit durch den Dämpferkolben 3 vom oberen Arbeitsraum 5 in den unteren Arbeitsraum 6 führt. Solange der Dämpferkolben 3 noch nicht in den von der Lage der Druckfeder 17 bestimmten Endbereich 19 der hydraulischen Zuganschlagdämpfung gelangt, kann die Dämpfungsflüssigkeit frei durch den Durchströmkanal 12 des Zuströmkolbens 11 zu den Eintrittsöffnungen des Arbeitskolbens 4 gelangen, da die obere Federscheibe 14 des Zuströmkolbens 11 die vorbeschriebenen Durchbrüche 16 aufweist. Die Arbeitsdämpfung in Zugrichtung wird durch die Ausbildung der Federscheibe 8 am Arbeitskolben 4 bestimmt.

Sobald der Dämpferkolben 3 in den Endbereich 19 für den hydraulischen Zuganschlag kommt, wie dieses in Fig. 2 dargestellt ist, sich also der Zuströmkolben 11 gegen die Abdeckplatte 18 der Druckfeder 17 legt, wird die Zuströmöffnung des Durchströmkanals 12 des Zuströmkolbens 11 verschlossen, da die Abdeckplatte 18 die Durchbrüche 16 in der Federscheibe 14 verschließt. Die Dämpfungsflüssigkeit durchfließt den Dämpferkolben 3 dann durch den sich von außen nach innen erstreckenden Durchströmkanal 13 des Zuströmkolbens 11, der von der Federscheibe 15 abgedeckt wird. Über den Zwischenraum 20 fließt die Dämpfungsflüssigkeit dann in die Einströmöffnung des Durchströmkanals 9 des Arbeitskolbens 4. Dadurch, daß nun sowohl die Federscheibe 15 als auch die Federscheibe 8 einen Strömungswiderstand bilden, ergibt sich die erhöhte hydraulische Dämpfung im Endbereich 19 und somit die Funktion des hydraulischen Zuganschlags.

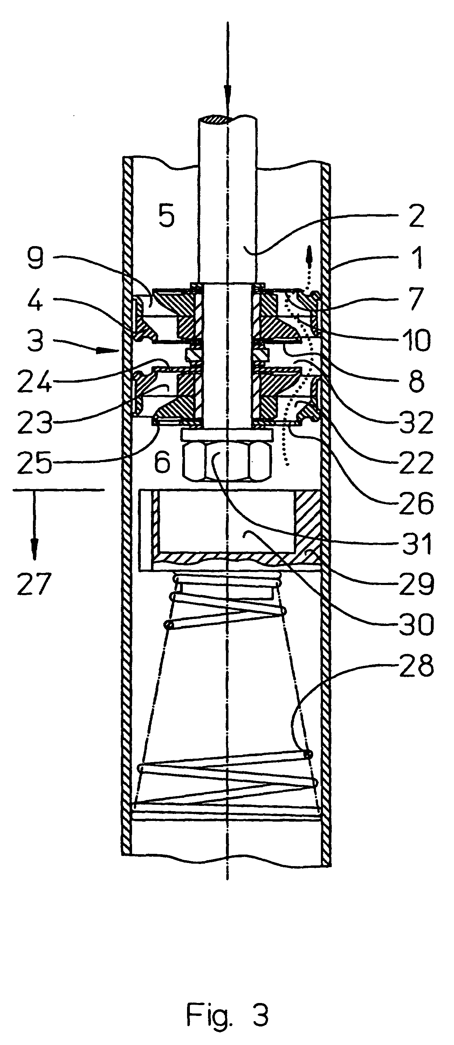

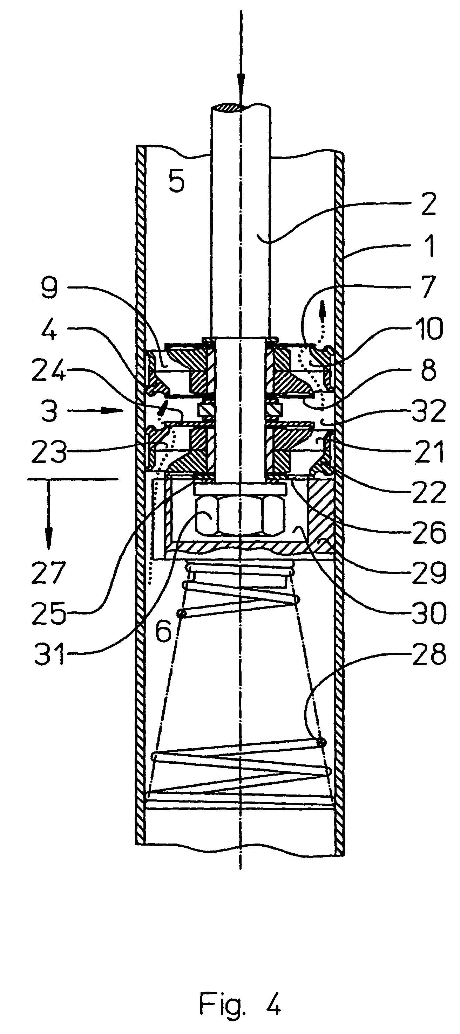

Ein hydraulischer Druckanschlag nach der Erfindung ist in den Fig. 3 und 4 dargestellt. Hier ist kolbenstangenendseitig unter dem Arbeitskolben 4 ein Zuströmkolben 21 mit unterschiedlichen Durchströmkanälen 22, 23 angeordnet. Beide Durchströmkanäle 22, 23 sind wiederum durch Federscheiben 24, 25 im Innenbereich abgedeckt. Bei der Ausbildung des Druckanschlages weist die kolbenstangenendseitige Federscheibe 25 Durchbrüche 26 auf. Wiederum ist ein Endbereich 27, hier für den hydraulischen Druckanschlag, durch eine Druckfeder 28 bestimmt, die sich am von der Kolbenstange 2 abgewandten Ende gegen die Wandung des Dämpferrohrs 1 an diesem abstützt. Am gegenüberliegenden Ende der Druckfeder ist eine Abdeckglocke 29 angebracht, die eine Ausnehmung 30 aufweist, in die die Befestigungsmutter 31 zum Halten des Dämpferkolbens 3 auf der Kolbenstange 2 eintauchen kann.

Während der normalen Arbeitsfunktion des Schwingungsdämpfers, wie sie beim Einfahren der Kolbenstange 2 in das Dämpferrohr 1 in Fig. 3 dargestellt ist, entwikkelt sich im unteren Arbeitsraum 6 ein gegenüber dem Druck im Arbeitsraum 5 erhöhter Druck. Das führt zum Durchfließen der Dämpfungsflüssigkeit durch den Arbeitskolben 4 vom unteren Arbeitsraum 6 in den oberen Arbeitsraum 5. Die Dämpfungsflüssigkeit kann aufgrund der Durchbrüche 26 in der Federscheibe 25 die Durchströmkanäle 22 im Zuströmkolben 21 frei durchfließen und durchströmt dann den Durchströmkanal 10 des Arbeitskolbens 4, der von der Federscheibe 7 federnd nachgiebig abgedeckt ist. Sobald der Dämpferkolben 3 entsprechend Fig. 4 in den druckseitigen Endbereich 27 kommt, sich also die Abdeckglocke 29 gegen die inneren Einströmöffnungen des Zuströmkolbens 21 legt, ist der Durchströmkanal 22 verschlossen. Die Dämpfungsflüssigkeit muß dann durch den Durchströmkanal 23 fließen, der durch die federnd nachgiebige Federscheibe 24 verschlossen wird. Über den Zwischenraum 32 wird die Dämpfungsflüssigkeit danach zur Einströmöffnung des Durchströmkanals 10 des Arbeitskolbens 4 geführt, welcher wiederum durch die federnd nachgiebige Federscheibe 7 abgedeckt ist. Durch die Addition der durch die Federscheiben 7 und 24 erzeugten Strömungswiderstände ergibt sich die gewünschte erhöhte hydraulische Dämpfung für den hydraulischen Druckanschlag.

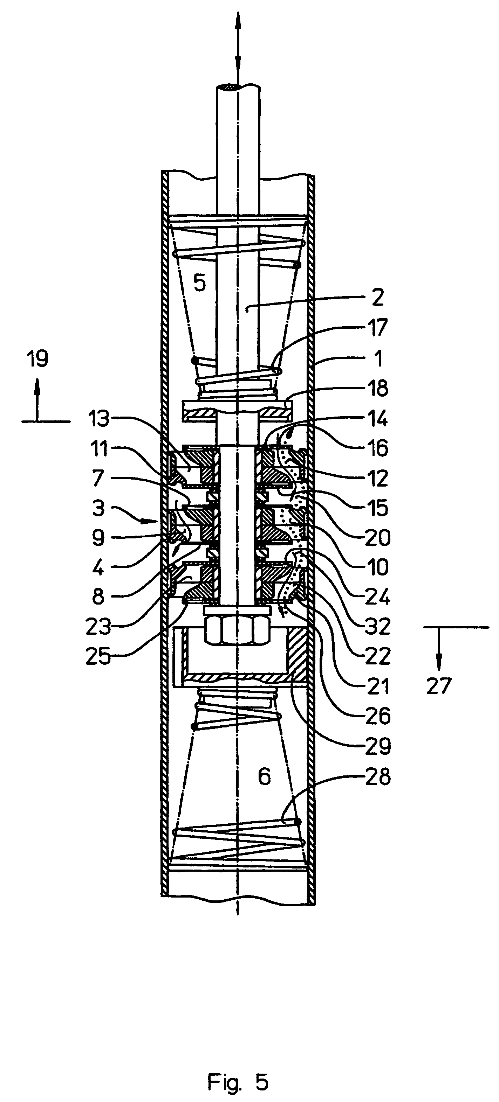

In den Fig. 5 bis 7 ist die Ausbildung eines hydraulischen Schwingungsdämpfers mit einem hydraulischen Druckanschlag und einem hydraulischen Zuganschlag dargestellt. Diese Ausbildung stellt also die Kombination der Ausbildungen entsprechend den Fig. 1 bis 4 dar. Der zugstangenendseitige Dämpferkolben 3 besteht hier aus dem mittig angeordneten Arbeitskolben 4, dem sich axial beidseitig die Zuströmkolben 11 und 21 anschließen. Ebenso sind in den Endbereichen 19, 27 Druckfedern 17, 28 fixiert, die eine Abdeckplatte 18 bzw. eine Abdeckglocke 29 tragen.

Während der normalen Dämpfungsfunktion, also in Zug- und Druckrichtung der Kolbenstange 2 und damit des Dämpfungskolbens 3 entsprechend Fig. 5, kann die Dämpfungsflüssigkeit ungehindert die Durchströmkanäle 12 durch den Zuströmkolben 11 bzw. die Durchströmkanäle 22 durch den Zuströmkolben 21 durchdringen, da die Durchbrüche 16, 26 durch die Federscheiben 14, 25 offen sind. Lediglich die Federscheiben 7, 8 des Arbeitskolbens 4 bestimmen die jeweilige Dämpfung des ein- oder ausfahrenden Dämpferkolbens 3.

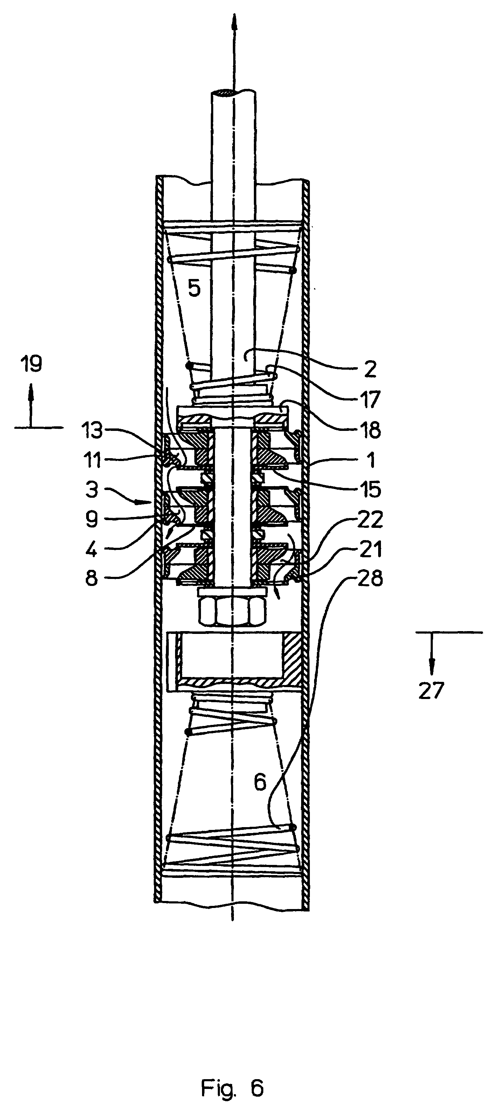

Beim Einfahren des Dämpferkolbens 3 in den Endbereich 19 für die hydraulische Zuganschlagdämpfung gemäß Fig. 6 werden die Einströmöffnungen der Durchströmkanäle 12 des Zuströmkolbens 11 verschlossen, wie dieses bereits zu Fig. 2 beschrieben ist. Die Dämpfungsflüssigkeit durchströmt dann mit erhöhtem Widerstand den durch die Federscheibe 15 abgedeckten Durchströmkanal 13 des Zuströmkolbens 11. Wie Fig. 6 zu entnehmen ist, kann die nach Dämpfung durch die Federscheibe 8 aus dem Arbeitskolben 4 austretende Dämpfungsflüssigkeit ungehindert den Zuströmkolben 21 durchströmen, da die Durchbrüche 26 in der Federscheibe 25 ein ungehindertes Durchströmen durch die Durchströmkanäle 22 erlauben.

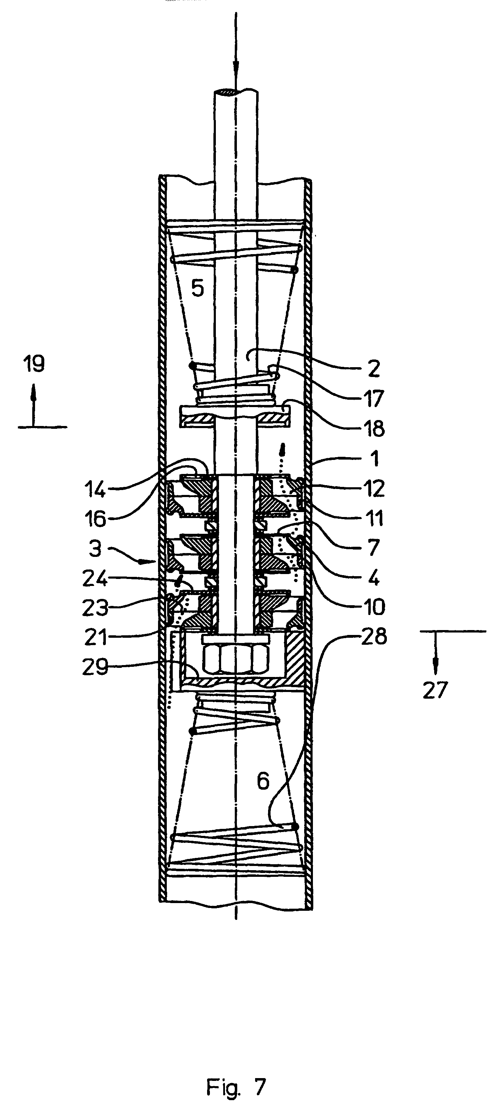

Die Wirkung des hydraulischen Druckanschlages gemäß Fig. 7 entspricht der Wirkungsweise des hydraulischen Druckanschlages gemäß Fig. 4, sobald der Dämpferkolben 3 in den entsprechenden Endbereich 27 einfährt. Da die Zuströmöffnungen der Durchströmkanäle 22 des Zuströmkolbens 21 verschlossen sind, durchströmt die Dämpfungsflüssigkeit die Durchströmkanäle 23 unter Überwindung des durch die Federscheibe 24 hervorgerufenen Strömungswiderstandes. Nach Verteilung im Zwischenraum 32 wird dann der Arbeitskolben 4 unter Überwindung des durch die Federscheibe 7 hervorgerufenen Strömungswiderstandes durchflossen, um danach ohne besonderen Strömungswiderstand den Zuströmkolben 11 durchfließen zu können.

Die Darstellung eines erfindungsgemäßen Zuganschlages gemäß Fig. 8 entspricht der Darstellung gemäß Fig. 1. Bei dieser Ausbildung liegt zwischen der Abdeckplatte 18 und dem Zuströmkolben 11 oberhalb der Federscheibe 14 eine axial nachgebende Feder 33, die - wie dargestellt - als Wellfeder ausgebildet sein kann.

Sobald der Dämpferkolben 3, wie in Fig. 9 gezeigt, entsprechend Fig. 2 in den Endbereich 19 für den hydraulischen Zuganschlag kommt, legt sich die am unteren Ende der Druckfeder 17 angeordnete Abdeckplatte 18 gegen die Feder 33. Zwischen der Abdeckplatte 18 und der auf dem Zuströmkolben 11 liegenden Federscheibe 14 verbleibt ein Abstand 34, durch den eine gedrosselte Zuströmung der Dämpfungsflüssigkeit aus dem Arbeitsraum 5 in den Durchströmkanal 12 möglich bleibt.

Je stärker der Dämpferkolben 3 gegen die Druckfeder 17 gezogen wird, desto stärker ist auch die durch diese Druckfeder 17 aufgebrachte Andrückkraft auf die Abdeckplatte 18 und damit auf die Feder 33. Somit verringert sich der Abstand 34 kontinuierlich, bis er sich spätestens auf Null reduziert, sobald die Druckfeder 17 auf Block gefahren ist. Die Verringerung des Abstandes 34 in Abhängigkeit vom Zusammendrücken der Druckfeder 17 ist abhängig von der Auslegung der Druckfeder 17 und der Feder 33. Der Abstand 34 kann demgemäß auch bereits Null erreichen, bevor die Druckfeder 17 auf Block zusammengefahren ist.

### Bezugszeichenliste

- 1.: Dämpferrohr
- 2.: Kolbenstange
- 3.: Dämpferkolben
- 4.: Arbeitskolben
- 5.: Arbeitsraum
- 6.: Arbeitsraum
- 7.: Federscheibe
- 8.: Federscheibe
- 9.: Durchströmkanal
- 10.: Durchströmkanal
- 11.: Zuströmkolben
- 12.: Durchströmkanal
- 13.: Durchströmkanal
- 14.: Federscheibe
- 15.: Federscheibe
- 16.: Durchbruch
- 17.: Druckfeder
- 18.: Abdeckplatte
- 19.: Endbereich
- 20.: Zwischenraum
- 21.: Zuströmkolben
- 22.: Durchströmkanal
- 23.: Durchströmkanal
- 24.: Federscheibe
- 25.: Federscheibe
- 26.: Durchbruch
- 27.: Endbereich
- 28.: Druckfeder
- 29.: Abdeckglocke
- 30.: Ausnehmung
- 31.: Befestigungsmutter
- 32.: Zwischenraum
- 33.: Feder
- 34.: Abstand

## Patentansprüche

1. Vorrichtung zur Erhöhung der Dämpfung am Endbereich (19, 27) von hydraulischen Schwingungsdämpfern mit hydraulischen Mitteln, wobei der Durchströmquerschnitt des den Dämpferinnenraum in zwei Arbeitsräume unterteilenden Dämpferkolbens (3) durch teilweises Abdecken der Zuströmfläche reduziert wird, wobei die Zuströmfläche aus mehreren nicht miteinander verbundenen Einzelzuströmflächen besteht, wobei eine oder mehrere der Einzelzuströmflächen vollständig abgedeckt werden, und wobei die Abdichtung durch eine am Ende einer Feder (17, 28) angeordnete Abdeckplatte (18) oder eine entsprechend gehaltene Abdeckglocke (29) erfolgt, **dadurch gekennzeichnet, dass** zwischen Abdeckplatte (18) oder Abdeckglocke (29) und Zuströmkolben (11, 21) eine axial nachgiebige Feder (33) angeordnet ist.

2. Vorrichtung nach Anspruch 1, **dadurch gekennzeichnet, daß** die Einzelzuströmflächen auf wenigstens zwei sich nicht berührenden, ineinanderliegenden Ringbereichen des Dämpferkolbens (3) angeordnet sind.

3. Vorrichtung nach Anspruch 2, **dadurch gekennzeichnet, daß** die Ringbereiche durch kreisförmig ausgebildete Kanten oder Schneiden voneinander getrennt sind.

4. Vorrichtung nach einem oder mehreren der Ansprüche 1 bis 3, **dadurch gekennzeichnet, daß** der Dämpferkolben (3) neben einem Arbeitskolben (4) einen oder mehrere Zuströmkolben (11, 21) aufweist.

5. Vorrichtung nach Anspruch 4, **dadurch gekennzeichnet, daß** der/die Zuströmkolben (11, 21) Einzelzuströmflächen aufweist.

6. Vorrichtung nach Anspruch 4 oder 5, **dadurch gekennzeichnet, daß** die nicht verschließbaren Durchströmkanäle (13, 23) des/der Zuströmkolben (11, 21) austrittsseitig durch Federscheiben (15, 24) abgedeckt sind.

## Claims

1. Device for increasing the damping effect at the end region (19, 27) of hydraulic vibration dampers with hydraulic media, wherein the through-flow cross-section of the damper piston (3) which divides the inner damper chamber into two working chambers is reduced by partial covering of the in-flow area, wherein the in-flow area consists of a plurality of individual in-flow areas which are not connected to each other, wherein one or a plurality of the individual in-flow areas are completely covered and wherein sealing is achieved by a cover plate (18), which is disposed at the end of a spring (17, 28), or by a correspondingly held cover bell (29), **characterised in that** an axially yielding spring (33) is disposed between the cover plate (18) or cover bell (29) and in-flow piston (11, 21).

2. Device as claimed in claim 1, **characterised in that** the individual in-flow areas are disposed on at least two annular regions of the damper piston (3) which lie one inside the other but do not touch.

3. Device as claimed in claim 2, **characterised in that** the annular regions are separated from each other by circular edges or cuts.

4. Device as claimed in any one or several of claims 1 to 3, **characterised in that** the damper piston (3) has one or a plurality of in-flow pistons (11, 21) in addition to a working piston (4).

5. Device as claimed in claim 4, **characterised in that** the in-flow piston(s) (11, 21) has individual in-flow areas.

6. Device as claimed in claim 4 or 5, **characterised in that** the non-closable through-flow channels (13, 23) of the in-flow piston(s) (11, 21) are covered on the outlet side by spring plates (15, 24).

## Revendications

1. Dispositif pour renforcer l'amortissement dans la région terminale (19, 27) d'amortisseurs hydrauliques par des moyens hydrauliques, dans lequel la section de passage à travers le piston (3) divisant l'espace interne de l'amortisseur en deux chambres de travail, est réduite par obturation partielle de la surface d'admission, la surface d'admission étant constituée de plusieurs surfaces d'admission distinctes qui ne sont pas reliées entre elles, une ou plusieurs des surfaces d'admission distinctes étant complètement obturées, et l'étanchéité résultant d'une plaque d'obturation (18) disposée à l'extrémité d'un ressort (17, 28), ou d'une cloche d'obturation (29) maintenue de manière correspondante, **caractérisé en ce que**, entre la plaque d'obturation (18) ou la cloche d'obturation (29) et le piston d'admission (11, 21), est agencé un ressort (33) flexible dans le sens axial.

2. Dispositif selon la revendication 1, **caractérisé en ce que** les surfaces d'admission distinctes sont agencées sur au moins deux régions annulaires du piston (3) de l'amortisseur, disposées l'une à l'intérieur de l'autre, sans contact.

3. Dispositif selon la revendication 2, **caractérisé en ce que** les régions annulaires sont séparées l'une de l'autre par des arêtes ou des découpes circulaires.

4. Dispositif selon une ou plusieurs des revendications 1 à 3, **caractérisé en ce que** le piston d'amortisseur (3) présente un ou plusieurs pistons d'admission (11, 21) en plus d'un piston de travail (4).

5. Dispositif selon la revendication 4, **caractérisé en ce que** le/les pistons d'admission (11,21) présentent des surfaces d'admission distinctes.

6. Dispositif selon la revendication 4 ou 5, **caractérisé en ce que** les canaux de passage (13, 23) qui ne peuvent être fermés du/des pistons d'admission (11, 21) sont obturés du côté de la face de sortie par des disques de ressort (15, 24).
